Europäisches Patentamt

European Patent Office

Office européen des brevets

(11) Publication number: **0 457 218 A2**

# EUROPEAN PATENT APPLICATION

(21) Application number: **91107644.6**

(22) Date of filing: **10.05.91**

(51) Int. Cl.5: **G06F 3/033, G06K 11/10**

(30) Priority: **15.05.90 JP 125052/90**

(43) Date of publication of application:
**21.11.91 Bulletin 91/47**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Morita, Yoshiyuki**
**Seiko Instruments Inc., 31-1, Kameido**
**6-chome**
**Koto-ku, Tokyo(JP)**

(74) Representative: **Fleuchaus, Leo, Dipl.-Ing. et al**
**Melchiorstrasse 42**
**W-8000 München 71(DE)**

(54) **Wireless coordinate reading system.**

(57) An electromagnetic wireless induction type co-ordinate reading system for inputting coordinates to an external device such as a computer comprises a coil which is electromagnetically coupled with loop line groups. A resonator is adapted to resonate with the AC signal generated by an excitation signal generating circuit. The position of the coil is determined by controlling the loop line groups sequentially in order to select one of two adjacent loop lines whereas the other loop line is temporarily selected by a detection scanning circuit. The amplitudes of the signals induced on the individual loop lines are processed arithmetically.

There are two sets of zigzag excitation lines which are alternately excited to determine the position of the coil.

FIG. 1

The present invention relates to a coordinate reading system for inputting coordinates to an external device such as a computer and, more particularly, to an electromagnetic induction type coordinate system applying the electromagnetic induction phenomenon.

[Prior Art]

The coordinate reading system of the prior art is exemplified by our Japanese Patent Laid-Opens Nos. 96825/1977 and 96411/1980.

These coordinate reading systems will be briefly described in the following.

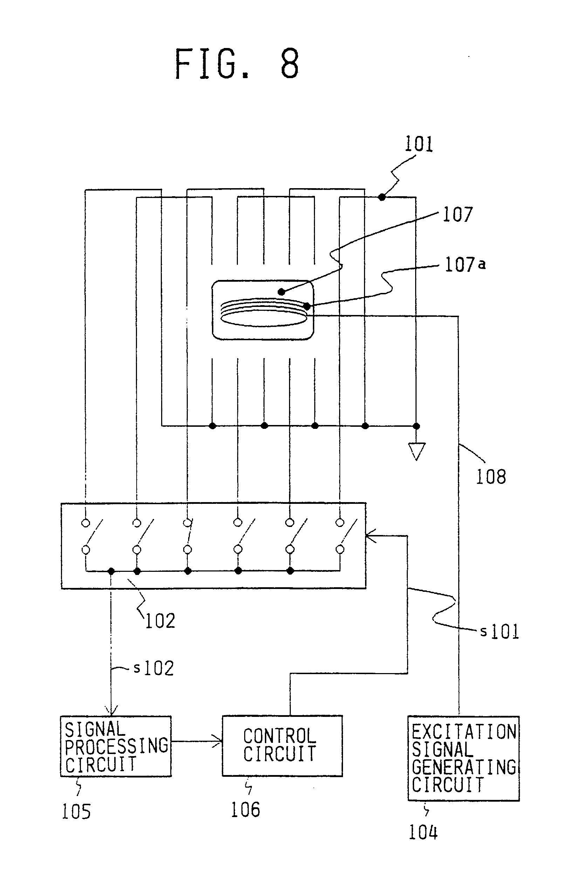

Fig. 8 is a diagram showing the structure of the coordinate reading system of the prior art. In a tablet acting as a coordinate reading plate, there are laid a plurality of sense line groups 101 which have loop shapes. The tablet is not explicitly shown in Fig. 8. The sense line groups are selected one by one by a scanning circuit 102. This scanning circuit 102 has its output connected with a signal processing circuit 105, the output of which in turn is connected with a control circuit 106. This control circuit 106 feeds a scanning signal s101 to select the aforementioned scanning circuit 102 sequentially. On the other hand, a coordinate indicator 107 has a coil 107a packaged therein and is connected through an excitation signal line 108 with an excitation signal generating circuit 104 which is packaged in the tablet.

With the structure thus made, the coordinate values are calculated in the following manner. The coordinate indicator 107 is placed on the sense line groups 101 and generates an AC magnetic field at all times in response to the signal of the excitation signal generating circuit 104. The control circuit 106 feeds the scanning signal s101 to select the scanning circuit 102 sequentially. Since an indication current according to the position of the coordinate indicator 107, an induction signal s102 for each sense line is sequentially inputted to the signal processing circuit 105 by selecting the sense line groups 101 with the scanning circuit 102. The signal processing circuit 105 generates an enveloping waveform of those induction signals. The control circuit 106 determines the coordinate values by inputting the amplitudes of the induction signals for the individual sense lines from the enveloping waveform and by comparing the amplitudes arithmetically.

[Problems to Be Solved by the Invention]

In this coordinate reading system of the prior art, however, the AC signal has to be fed to the coordinate indicator so as to generate the magnetic field from the coordinate indicator. For this necessity, the tablet and the coordinate indicator have to be connected through a signal line.

The present invention has been solved to solve the aforementioned problems in the coordinate reading system of the prior art and has an object to provide a wireless coordinate reading system which need not have its coordinate indicator and tablet connected through the signal line.

[Means for Solving the Problems]

In order to solve the aforementioned problems, according to the present invention, the coordinate reading system is constructed to have the following structure.

In order to a first structure for achieving one dimensional coordinate values, there is provided a wireless coordinate reading system comprising: a plurality of sense line groups laid at an equal distance from and in parallel with one another in a direction to detect coordinates; a first excitation line having zigzag connected conductor groups laid at an equal distance from and in parallel with one another in a direction to intersect said sense line groups at a right angle; a second excitation line made similar to said first excitation line and having conductors laid with a displacement of one half of the distance of the conductors of said first excitation line; an excitation signal generating circuit for feeding said first excitation line and said second excitation line with an AC signal; an excitation selecting circuit for selecting one of said first excitation line and said second excitation line to connect said excitation line with said excitation signal generating circuit; a scanning circuit for selecting one sense line from said sense line groups; a coordinate indicator including: a coil placed on said sense line groups and adapted to be electromagnetically coupled with said first and second excitation lines and said sense line groups; and a resonator adapted to resonate with the AC signal generated by said excitation signal generating circuit; a signal processing circuit connected with said circuit for processing an induced signal which is induced in said sense line groups by an electromagnetic coupling with said coordinate indicator; and a control circuit for determining the coordinates of the position, in which said coordinate indicator is placed, by performing such controls that one of said first excitation line and said second excitation line is selected by said excitation selecting circuit whereas said sense lines are sequentially selected by said scanning circuit, and by inputting the induced signals, which are induced on the individual sense lines, sequentially from said signal processing circuit to process the amplitudes of said induced signals arithmetically.

According to a second structure for achieving two-dimensional coordinate values, the two excitation lines, the sense line groups, the excitation selecting circuit and the scanning circuit in the first structure are provided in each of the X- and Y-directions of the orthogonal X-Y coordinate system, and the control circuit is constructed in each of the X- and Y-directions.

4. Brief Description of the Drawings

Fig. 1 is a diagram showing the structure of the first embodiment of the coordinate reading system according to the present invention; Fig. 2 is a diagram showing the structure of the signal processing circuit; Fig. 3 is a diagram illustrating the distribution of the induction signal; Fig. 4 is a diagram showing the induction signal; Fig. 5 is a diagram showing the enveloping line signal; Figs. 6(a) to 6(c) are diagrams showing the distributions of the induction signals against the coil position; Fig. 7 is a diagram showing the value Q against the coil position; and Fig. 8 is a diagram showing the structure of the coordinate reading system of the prior art.

The operations of the first structure will be described in the following.

The control circuit feeds the scanning signals to the excitation selecting circuit and the scanning circuit. As a result, one of the two excitation lines and one sense line are selected. One of the excitation lines thus selected is connected with the excitation signal generating circuit to generate the AC magnetic field, whereas the sense line is connected with the signal processing circuit.

On the other hand, the coordinate indicator is placed on the sense line so as to indicate the position. If this coordinate indicator is placed in the vicinity of the two sense lines selected as above, a induction signal is generated in the selected sense line by the electromagnetically couplings between the excitation line and the coil in the coordinate indicator and between the coil and the sense line, because this coordinate indicator is made resonant with the excitation signal.

The control circuit selects the two excitation lines alternately by a method according to the necessity, and selects the sense lines sequentially. Since the sense line generates the induction signal according to the position of the coordinate indicator, the induction signals for the individual sense lines are sequentially inputted to the signal processing circuit. This signal processing circuit generates the enveloping waveform according to the amplitudes of those induction signals. The control circuit determined the coordinate values by inputting the amplitudes of the induction signals for the individual sense lines from the enveloping waveform and by comparing the amplitudes arithmetically.

[Embodiments]

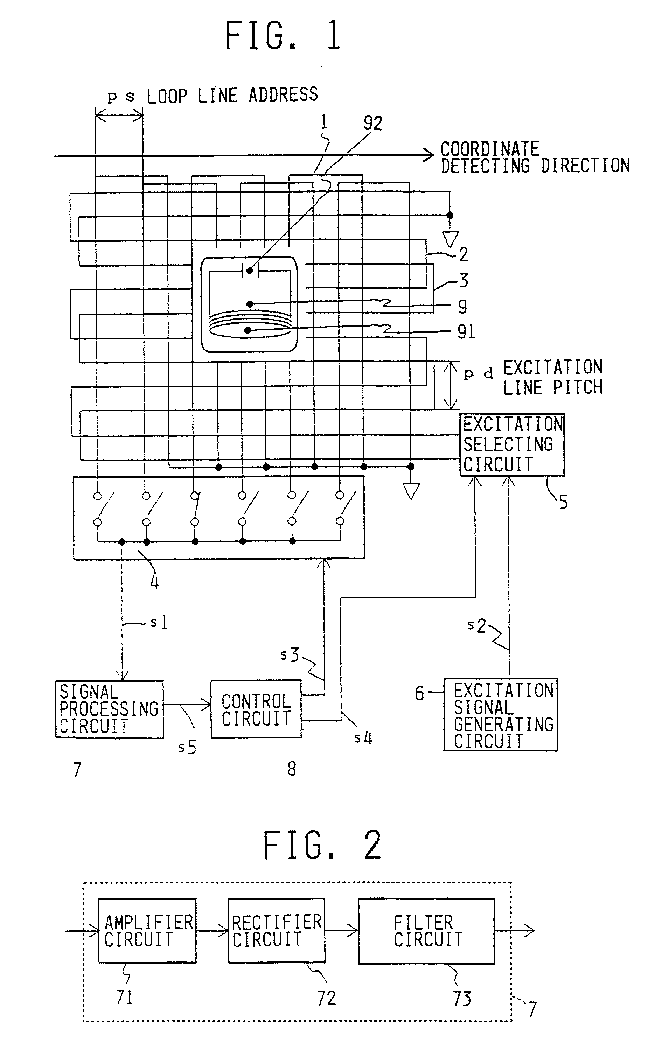

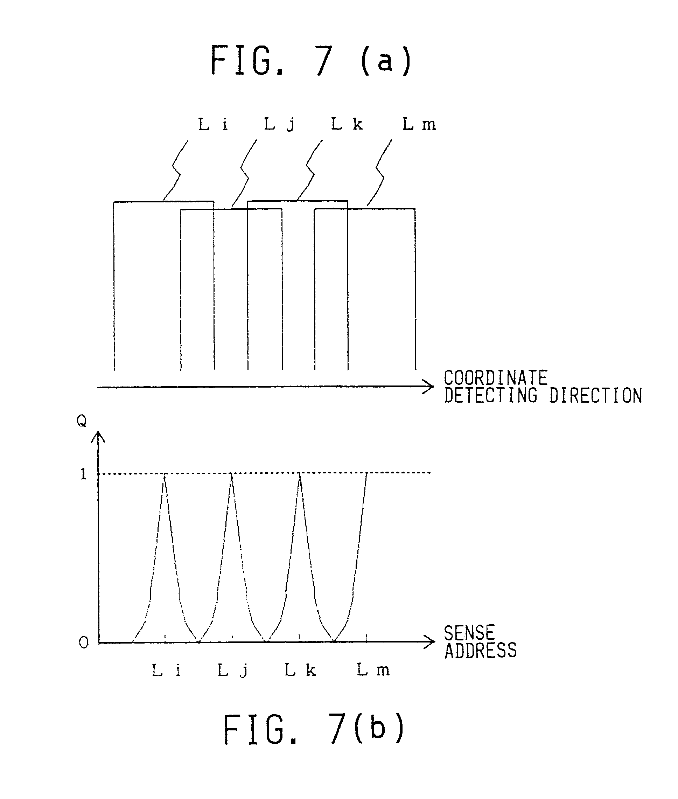

A first embodiment of the present invention will be described in the following with reference to Figs. 1 to 7. This structure is directed to a coordinate reading system for achieving the one-dimensional coordinate values.

Although not explicitly shown, the coordinate reading system is roughly divided into a coordinate reading plate called the "tablet" and a coordinate indicator. This coordinate indicator can be freely moved on the tablet and used to indicate the position, the coordinate values of which are to be read out.

(Structure of the Coordinate Reading System)

First of all, the structure will be described in the following. Figs. 1 and 2 are diagrams showing the structure of the coordinate reading system according to the present invention.

As shown, reference numeral 1 designates sense line groups. The individual sense lines are laid in the tablet at an equal distance from and in parallel with one another. The distance between the sense lines is a sense line pitch ps. The individual sense lines have their one-side ends connected with one another and grounded to the earth. The other ends are individually connected with a scanning circuit 4.

Numeral 2 designates a first excitation line, and numeral 3 designates a second excitation line. These excitation lines are also laid on the tablet and have a plurality of zigzag connected conductors which are laid at an equal distance from and in parallel with one another in the direction perpendicular to the coordinate detecting direction. If the distance of the conductors is designated at an excitation line pitch pd, the first and second excitation lines are laid at a distance of pd/2. The excitation lines have their one-side ends grounded to the earth and their other ends connected with the excitation selecting circuit 5.

The scanning circuit 4 and the excitation selecting circuit 5 are composed of a plurality of electronic switch elements such as analog switches, the one-side ends of which are connected with one another to provide a common terminal. In response to a selection signal, one of the switch elements is closed to connect the one-side ends with the common terminal.

The scanning circuit 4 has its individual terminals connected with the individual sense lines of the aforementioned sense line groups 1. Moreover, the common terminal of the scanning circuit 4 is connected with the input of a signal processing circuit 7.

The structure of the signal processing circuit 7 is shown in Fig. 2. This signal processing circuit 7 is composed of an amplifier circuit 71, a rectifier circuit 72 and a filter circuit 73. The signal processing circuit 5 functionally generates the enveloping line of the input signals and can have a structure different from that shown in Fig. 2. It is conceivable to change the arrangement of the amplifier circuit or to provide a plurality of amplifier circuits by considering the S/N ratios, for example, but the structure is essentially identical to that of Fig. 2.

The excitation selecting circuit 5 has its common terminal connected with an excitation signal generating circuit 6. This circuit 6 feeds an excitation signal s2 or an AC signal to the excitation line which is selected by the excitation selecting circuit 5. The excitation signal s2 is an AC signal of about 614.4 KHz, for example. However, this signal should not have its frequency restricted to that value but may basically generate an electromagnetic induction between the excitation lines and the sense lines and a later-described coil.

A control circuit 8 is connected with the scanning circuit 4 and the excitation selecting circuit 3 so as to feed them with selection signals. The selection signal to be fed to the scanning circuit 4 is the "sense address s3", and the selection signal to be fed to the excitation selecting circuit 5 is called the "drive address s4". The control circuit 8 outputs the sense address s3 and the drive address s4. Specifically, one sense line is connected with the signal processing circuit 7 whereas the other is connected with the excitation signal generating circuit 6.

The control circuit 8 is further fed with an enveloping line signal s5 from the signal processing circuit 7. This input unit is an A/D converter for reading the voltage value of the enveloping line signal s5 as a digital quantity.

A coordinate indicator 9 is composed of a coil 91 and a capacitor 92 to constitute a parallel resonant circuit. The resonant frequency is equal to that of the excitation signal s2 which is generated by the excitation signal generating circuit 6.

(Operations of the Coordinate Reading System - Signal Processing)

Next, the operations will be described in the following.

The control circuit 8 feeds the excitation selecting circuit 5 with the drive address s4 and connects one of the excitation line groups with the excitation signal generating circuit 6. After this, the control circuit 8 feeds the scanning circuit 4 with the sense address s3 to connect one of the sense line groups 1 with the signal processing circuit 7.

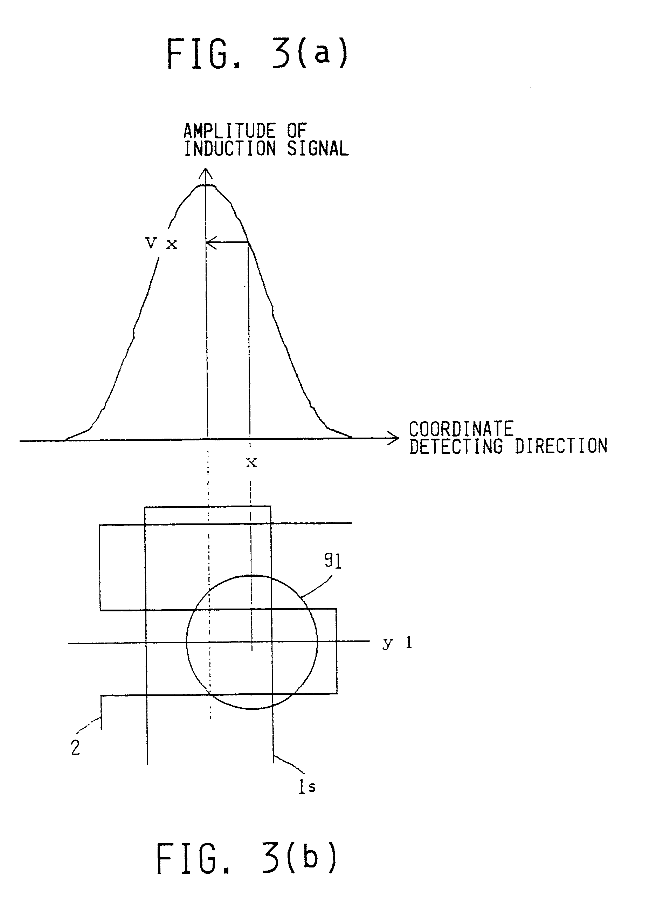

Here, when the coordinate indicator 9 comes close to the selected sense line, the properties of the induction signal to be induced by the sense line will be described with reference to Fig. 3. The magnitude of the induction signal is a function of the position of the coil in the coordinate detecting direction and the position at a right angle with respect to the former. Fig. 3 shows the amplitude of the induction signal which is induced in the sense line corresponding to the position of the coil 91 when the coil 91 moves along the coordinate detecting direction.

First of all, the following description is directed to the case in which the coil 91 is between the parallel conductors of the first excitation line 2 selected, i.e., a line y1 in Fig. 3. Now, let the case be considered, in which the coil 91 is placed in the vicinity of the selected sense line. The first excitation line 2 is connected with the excitation signal generating circuit 6 by the excitation selecting circuit 5 to generate an AC magnetic field. The coil 91 generates the induction signal by the electromagnetic coupling with the first excitation line 2, and the selected sense line 1s generates the induction with by the electromagnetic coupling with the coil 91.

As the coil 91 goes apart from the selected sense line 1s, the induction signal to be induced on the sense line 1s has its amplitude reduced. Fig. 3 illustrates that the induction signal takes an amplitude Vx when the coil 91 is in a position x.

In case the coil 91 is on the conductor of the first excitation line 2 selected, it does not generate the induction signal. This is because the coil has the same areas of the two regions to be divided by the conductors of the excitation line so that the inductions are canceled by the magnetic fluxes passing through the two regions and having the opposite phases. As a result, no induction signal is also generated on the sense line. In the coordinate reading system according to the present invention, the two excitation lines, i.e., the first and second excitation lines are provided and are alternately selected by the excitation selecting circuit 5 so that the induction signal is generated even in an arbitrary position in the coil 91.

Thus, the induction signal is generated on the sense line by selecting the excitation line and the sense line. The amplitude of this induction signal contains the information concerning the position, in which the coil 91 is placed. This information is utilized to determine the position by the present coordinate reading system.

The control circuit 8 selects the excitation lines alternately and selects the sense lines sequentially each time it selects one excitation line. Usually, the control circuit 6 selects them sequentially one by one in the coordinate detecting direction or in the opposite direction. However, this selecting sequence is not an essential problem. The sequence need not be orderly but may be random. The following description resorts the orderly sequence in the coordinate detecting direction.

By one selecting operation, one excitation sense line. Since the detection sense line generates an induction signal depending upon the positional relation to the coil 91, as has been described hereinbefore, the induction signal s1 is sequentially inputted to the signal processing circuit 7 by selecting the sense lines sequentially.

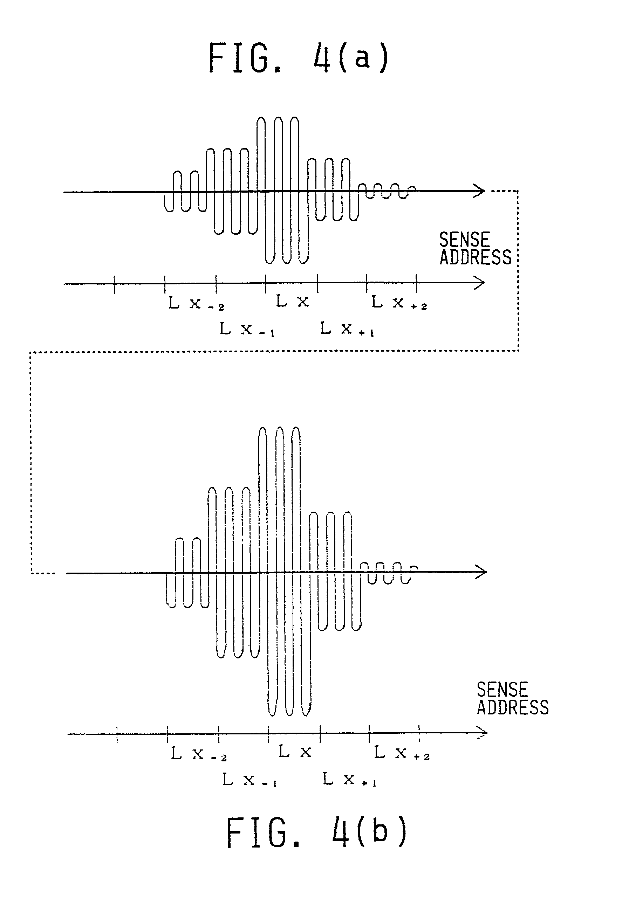

The induction signal s1 to be inputted to the signal processing circuit 7 is illustrated in Fig. 4. In this example, it is indicated that the coil 91 is present in the vicinity of the sense line of the sense address Lx. The signal to be induced in the sense line is higher when the second excitation line 3 than that when the first excitation line 2 is excited. This is because of the positional relation between the coil 91 and the two excitation lines.

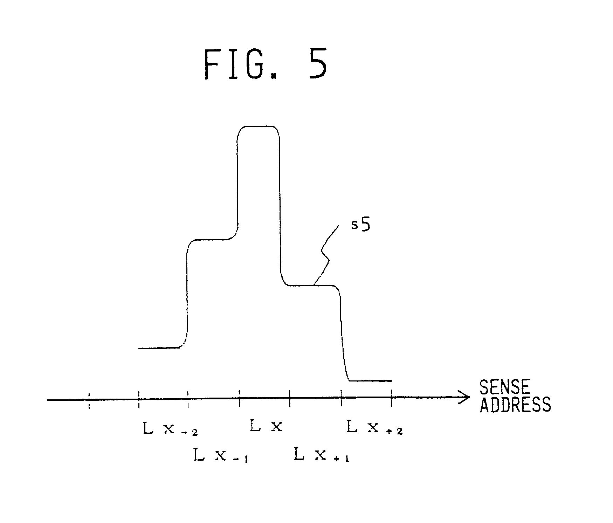

The induction signal s1 is amplified and detected and is converted into an enveloping line by the signal processing circuit 7. As has been described hereinbefore, the signal processing circuit 7 is a traditional AM detecting circuit. The induction signal s1, as shown in Fig. 4, is converted into the enveloping line signal s5 shown in Fig. 5.

(Operations of Coordinate Reading System - Calculations of Coordinates)

The method of calculating the coordinates from the enveloping line of the induction signal can be realized by the coordinate reading system of the prior art, such as the method disclosed in Japanese Patent Laid-Open No. 96411/1980, as will be briefly described in the following.

The control circuit 8 receives the enveloping line signal s5 from the signal processing circuit 7 each time the sense line groups 1 are sequentially selected. The input circuit of the control circuit 8 is the A/D converter, as has been described hereinbefore, and the magnitude of the enveloping line signal s5 is inputted in terms of a digital quantity.

The control circuit 8 detects the maximum signal and the signals of the two adjacent sense lines from the enveloping line signals s5 which are sequentially inputted. The individual signals are coded in the following manner.

$V_p$ - - - the maximum signal called the "peak signal";

$V_{ph}$ - - - the signal on the sense line which is adjacent in the coordinate detecting direction to the sense line having generated the maximum signal; and

$V_{p1}$ - - - the signal on the sense line which is inversely adjacent in the coordinate detecting direction to the sense line having generated the maximum signal.

As to the sense line having generated the maximum signal, its detected address is also stored and called the "peak address", as designated Padrs. The peak address roughly indicates the position in which the coordinate indicator is placed. This makes it possible to detect the position at the unit of the sense line pitch. A finer position is determined by calculating the peak signal and its two adjacent signals.

For this determination, the following value Q is calculated:

$$Q = (V_p - V_{ph})/(V_p - V_{p1}) \qquad (1),$$

wherein $V_{ph} > V_{p1}$.

This value Q has the following properties.

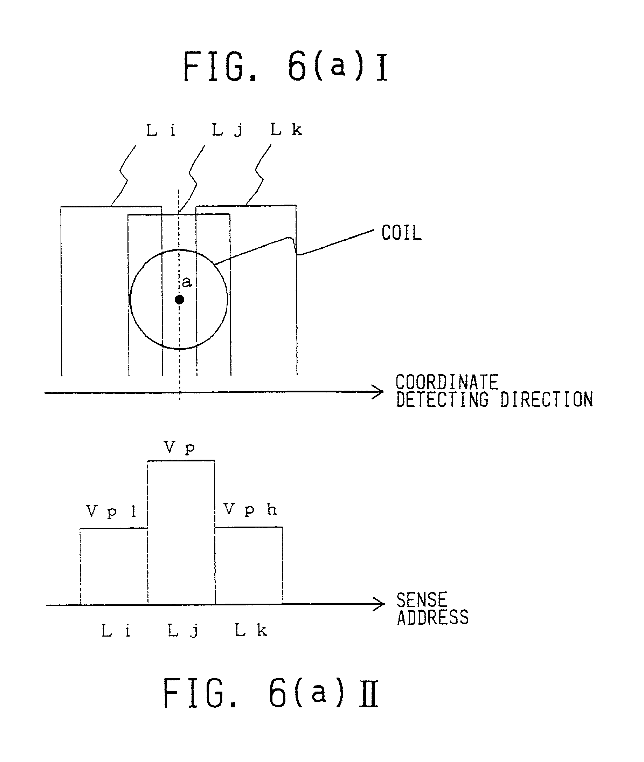

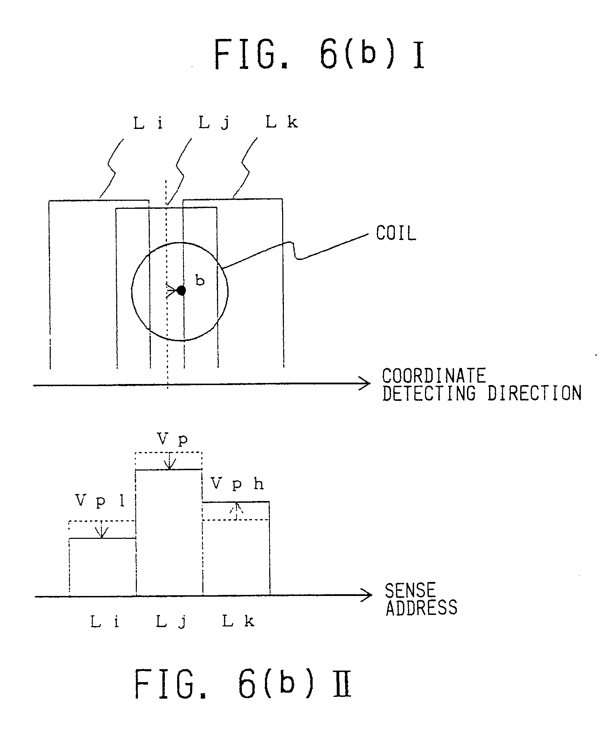

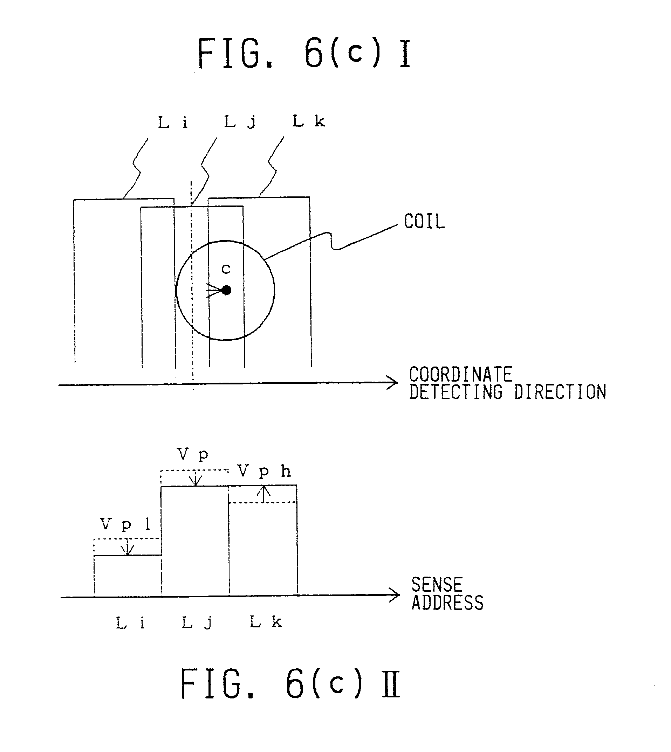

Let it be considered that the coil is placed at a point a, i.e, at the center of the sense line Lj, as shown in Fig. 6(a). Here, letter $L^*$ designates a sense address. At this time, the maximum induction signal is generated during the scanning on the detection sense line Lj, and the peak signal $V_p$ is inputted to the control circuit 8. The peak address takes Padrs = Lk. In the selection of one time before, the sense line Li is selected. In this case, a signal lower than $V_p$ is induced in the loop line Li, and the signal $V_{p1}$ is inputted to the control circuit 8. In the selection of one time after, a loop line Lk is selected, and the signal $V_{ph}$ is inputted to the control circuit 8. In the selections of one time before and after, the effects of the electromagnetic couplings are equal, i.e., $V_{ph} = V_{p1}$, although the detail will be omitted. As a result, Q = 1 is obtained from Equation 1.

If the coil moves in the coordinate detecting direction, as shown in Fig. 6(b), the couplings of Li and Lj are reduced in accordance with the scanning sequence, but the coupling of Lk is increased. As a result, the signals $V_p$ and $V_{p1}$ are reduced whereas the signal $V_{ph}$ is increased, so that the value Q of Equation 1 takes a value smaller than 1.

When the coil moves more to the position of Fig. 6(c), i.e., one half of the sense line pitch ps from the position of Fig. 6(a), the value Q takes the minimum. At this time, the effects of the couplings of Lj and Lk are equalized so that $V_p = V_{ph}$ and Q = 0.

In case of further leftward movement from the position of Fig. 6(a), the value is determined from Equation 1 by exchanging the signals $V_{ph}$ and $V_{p1}$. The changing tendency of the value Q is also identical in this case.

The value Q is between 1 to 0 for each one half pitch of the sense line and corresponds one-to-one to the detailed position between the sense lines. If the characteristics of the value Q are experimentally determined in advance, the detailed position between the sense lines can be determined by determining the value Q from the induction signal.

The coordinate value is determined by adding and subtracting the rough position at the peak address and the detailed position determined herein. The following Equation 2 calculates the coordinates:

$$\text{Coordinate Value} = \text{Padrs} \times \text{ps} + f(Q) \quad (2);$$

wherein Vph > Vp1, or
$$\text{Coordinate Value} = \text{Padrs} \times \text{ps} - f(Q);$$
wherein Vph < Vp1.

Here, the codes will be explained again:

Padrs: the peak address;

ps: the sense line pitch; and

f(Q): the detailed position corresponding to the value Q and between the sense lines.

(Another Example of Processing in the First Embodiment)

In the foregoing embodiment, the maximum signal during the scanning is adopted as the signal Vp. In more detail, the maximum signals Vp1 and Vp2 for the individual two excitation lines are detected, when the sense line is selected for each of the two excitation lines, so that the larger one of the two is adopted.

As another example of the processing, the coordinate values can be likewise determined if the signals Vp, Vp1 and Vph are defined, as follows:

Vp1: the maximum signal when the first exitation line is selected;

Vph1: the signal on the sense line which is adjacent in the coordinate detecting direction to the sense line having generated the maximum signal when the first excitation line is selected;

Vp11: the signal on the sense line which is inversely adjacent in the coordinate detecting direction to the sense line having generated the maximum signal when the first excitation line is selected;

Vp2: the maximum signal when the second exitation line is selected;

Vph2: the signal on the sense line which is adjacent in the coordinate detecting direction to the sense line having generated the maximum signal when the second excitation line is selected; and

Vp12: the signal on the sense line which is inversely adjacent in the coordinate detecting direction to the sense line having generated the maximum signal when the second excitation line is selected,

$$Vp = Vp1 + Vp2 \quad (3);$$

$$Vph = Vph1 + Vph2$$
$$Vp1 = Vp11 + Vp2.$$

The Equation (3) implies the signals Vp, Vph and Vp1 are determined in the one-dimensional form of the signals detected by the individual excitation lines, and may be an averaging calculation or the like.

In the description of the first embodiment, the scanning follows the procedure, in which the sense line is selected after one excitation line. The selecting procedures of the excitation line and the sense line may be such that two excitation lines are sequentially selected after the sense lines. Although, in this case, the sequence of the induction signal s1 to be inputted to the signal processing circuit 7 changes, the control circuit 8 outputs the sense address s3 and the drive address s4 by itself so that the correspondence of the induction signal s1 to the sense line is achieved without any trouble. The sequence of selecting the excitation lines and the sense lines is not an essential problem in the present invention.

(Another Embodiment)

If two sets of sense line groups, first and second excitation lines, excitation selecting circuits and scanning circuits are provided and constructed, as has been described in connection with the first embodiment so that they are arranged at a right angle, it is apparent that the two-dimensional coordinate reading system can be constructed. Although not shown, the X sense line group, the first X excitation line, the second X excitation line, the X scanning circuit, and the X excitation selecting circuit; and the Y sense line group, the first Y excitation line, the second Y excitation line, the Y scanning circuit and the Y excitation selecting circuit are provided and constructed likewise the first embodiment in the X and Y directions and are arranged at a right angle, although their operations will be omitted.

[Effects of the Invention]

As has been described hereinbefore, according to the present invention, two sets of zigzag excitation lines are provided and are alternately excited to determine the position of the coil from the induction signals coming from the electromagnetic couplings between the excitation line and the coil and between the coil and the sense line. Since no signal is fed to the coil packaged in the coordinate indicator unlike the coordinate reading system of the prior art, it is possible to realize a wireless coordinate reading system which need not connect the coordinate indicator and the tablet through the signal lines.

## Claims

1. A wireless coordinate reading system comprising:
   a. a plurality of sense line groups laid at an equal distance from and in parallel with one another in a direction to detect coordinates;
   b. a first excitation line having zigzag connected conductor groups laid at an equal distance from and in parallel with one another in a direction to intersect said sense line groups at a right angle;
   c. a second excitation line made similar to said first excitation line and having conductors laid with a displacement of one half of the distance of the conductors of said first excitation line;
   d. an excitation signal generating circuit for feeding said first excitation line and said second excitation line with an AC signal;
   e. an excitation selecting circuit for selecting one of said first excitation line and said second excitation line to connect said excitation line with said excitation signal generating circuit;
   f. a scanning circuit for selecting one sense line from said sense line groups;
   g. a coordinate indicator including: a coil placed on said sense line groups and adapted to be electromagnetically coupled with said first and second excitation lines and said sense line groups; and a resonator adapted to resonate with the AC signal generated by said excitation signal generating circuit;
   h. a signal processing circuit connected with said circuit for processing an induced signal which is induced in said sense line groups by an electromagnetic coupling with said coordinate indicator; and
   i. a control circuit for determining the coordinates of the position, in which said coordinate indicator is placed, by performing such controls that one of said first excitation line and said second excitation line is selected by said excitation selecting circuit whereas said sense lines are sequentially selected by said scanning circuit, and by inputting the induced signals, which are induced on the individual sense lines, sequentially from said signal processing circuit to process the amplitudes of said induced signals arithmetically.

2. A wireless coordinate reading system comprising:
   a. a plurality of sense line groups laid at an equal distance from and in parallel with one another in each of X- and Y- directions of an X-Y orthogonal coordinate system;
   b. a first excitation line having zigzag connected conductor groups laid at an equal distance from and in parallel with one another in a direction to intersect said sense line groups at a right angle in each of the X- and Y- directions of said X-Y orthogonal coordinate system;
   c. a second excitation line made similar to said first excitation line and having conductors laid with a displacement of one half of the distance of the conductors of said first excitation line in each of the X- and Y- directions of said X-Y orthogonal coordinate system;
   d. an excitation signal generating circuit for feeding said first excitation line and said second excitation line with an AC signal;
   e. an X excitation selecting circuit and a Y excitation selecting circuit for selecting one of said first excitation line and said second excitation line in each of the X- and Y- directions to connect said excitation line with said excitation signal generating circuit;
   signal processing circuit to process the amplitudes of said induced signals arithmetically.

# FIG. 1

ps LOOP LINE ADDRESS

COORDINATE DETECTING DIRECTION

pd EXCITATION LINE PITCH

EXCITATION SELECTING CIRCUIT 5

SIGNAL PROCESSING CIRCUIT 7

CONTROL CIRCUIT 8

EXCITATION SIGNAL GENERATING CIRCUIT 6

# FIG. 2

AMPLIFIER CIRCUIT 71

RECTIFIER CIRCUIT 72

FILTER CIRCUIT 73

7

# FIG. 3(a)

AMPLITUDE OF
INDUCTION SIGNAL

V x

COORDINATE
DETECTING DIRECTION

x

91

y 1

2

1s

# FIG. 3(b)

# FIG. 4(a)

SENSE
ADDRESS

$L x_{-2}$ $L x$ $L x_{+2}$

$L x_{-1}$ $L x_{+1}$

SENSE
ADDRESS

$L x_{-2}$ $L x$ $L x_{+2}$

$L x_{-1}$ $L x_{+1}$

# FIG. 4(b)

# FIG. 5

s5

SENSE
ADDRESS

L x₋₂         L x         L x₊₂

L x₋₁         L x₊₁

# FIG. 6(a) I

L i   L j   L k

COIL

a

→ COORDINATE
DETECTING DIRECTION

V p

V p l   V p h

→ SENSE
ADDRESS

L i   L j   L k

# FIG. 6(a) II

# FIG. 6(b) I

Li   Lj   Lk

COIL

b

COORDINATE
DETECTING DIRECTION

Vp

Vpl

Vph

SENSE
ADDRESS

Li    Lj    Lk

# FIG. 6(b) II

# FIG. 6(c) I

L i    L j    L k

COIL

c

COORDINATE
DETECTING DIRECTION

V p

V p h

V p l

SENSE
ADDRESS

L i    L j    L k

# FIG. 6(c) II

# FIG. 7 (a)

L i    L j    L k    L m

COORDINATE
DETECTING DIRECTION

Q

1

0

L i    L j    L k    L m

SENSE
ADDRESS

# FIG. 7(b)

# FIG. 8

SIGNAL PROCESSING CIRCUIT

CONTROL CIRCUIT

EXCITATION SIGNAL GENERATING CIRCUIT